# EUROPÄISCHE PATENTSCHRIFT

(11) **EP 2 287 240 B1**
(45) Veröffentlichungstag und Bekanntmachung des Hinweises auf die Patenterteilung: **02.05.2018**
(21) Anmeldenummer: 09009473.1
(22) Anmeldetag: 22.07.2009
(51) Int. Cl.: C08J 7/06, C08K 3/04, B05D 7/02

(54) **Verfahren zum Einbringen von Kohlenstoffteilchen in eine Polycarbonat-Oberflächenschicht**
Method for inserting carbon particles into a polycarbonate surface layer
Procédé d'introduction de particules de carbone dans une couche de surface en polycarbonate

(43) Veröffentlichungstag der Anmeldung: 23.02.2011
(73) Patentinhaber: Future Carbon GmbH, 95448 Bayreuth (DE)
(72) Erfinder: Vogel, Stephanie, Dr., 40764 Langenfeld (DE); Dern, Gesa, Dr., 40223 Düsseldorf (DE); Fußangel, Christel, 41462 Neuss (DE)
(74) Vertreter: Müller, Christian Stefan Gerd

(56) Entgegenhaltungen:
- EP-A1- 0 209 033
- EP-A2- 0 561 240
- WO-A2-2008/150867

## Beschreibung

Die vorliegende Erfindung betrifft ein Verfahren zum Einbringen von elektrisch leitfähigen Kohlenstoffteilchen in eine Polycarbonat umfassende Oberflächenschicht. Diese Kohlenstoffteilchen können insbesondere Kohlenstoff-Nanoröhren sein. Weiterhin betrifft die Erfindung einen Polycarbonat-Gegenstand mit einer durch ein erfindungsgemäßes Verfahren erhältlichen, elektrisch leitfähige Kohlenstoffteilchen umfassenden Oberflächenschicht und die Verwendung eines solchen Gegenstands.

Kohlenstoffnanoröhren (carbon nanotubes, CNTs) sind für ihre außergewöhnlichen Eigenschaften bekannt. So beträgt beispielsweise deren Festigkeit das ungefähr 100-fache des Stahls, deren thermische Leitfähigkeit ist etwa doppelt so groß wie die von Diamant, ihre thermische Stabilität reicht bis hoch zu 2800 °C im Vakuum und deren elektrische Leitfähigkeit kann ein Vielfaches der Leitfähigkeit von Kupfer betragen. Diese strukturbedingten Charakteristika sind auf molekularer Ebene allerdings nur dann zugänglich, wenn es gelingt, Kohlenstoffnanoröhren homogen zu verteilen und einen möglichst großen Kontakt zwischen den Röhren und dem Medium herzustellen, also diese mit dem Medium verträglich und somit stabil dispergierbar zu machen. Hinsichtlich elektrischer Leitfähigkeit ist es weiterhin erforderlich, ein homogenes Netzwerk an Röhren auszubilden, in dem sich diese im Idealfall nur an den Enden berühren. Hierbei sollten die Kohlenstoffnanoröhren möglichst vereinzelt, das heißt agglomeratfrei, nicht ausgerichtet und in einer Konzentration vorliegen, bei der sich ein solches Netzwerk gerade eben ausbilden kann, was sich durch den sprunghaften Anstieg der elektrischen Leitfähigkeit in Abhängigkeit von der Konzentration an Kohlenstoffnanoröhren widerspiegelt (Perkolationsgrenze).

Für technische Anwendungen ist daher die Einarbeitung von solchen Partikeln in Polymermatrices interessant. Zwei Aspekte müssen für eine erfolgreiche Verarbeitung von Kohlenstoffnanoröhren, wenn man durch ihre Nutzung einen Werkstoff beispielsweise elektrisch leitfähig machen möchte, berücksichtigt werden: das vollständige Aufbrechen und Entbündeln von Kohlenstoffnanoröhren-Agglomeraten und die Unterdrückung der großen Neigung von Kohlenstoffnanoröhren zur Reagglomeration (in ein und demselben Medium während des Alterungsprozesses oder während der Verarbeitung einer solchen Dispersion zum fertigen Werkstoff). Diese Schwierigkeiten bei der Kohlenstoffnanoröhren-Verarbeitung fußen auf den hydrophoben Charakter der Kohlenstoffnanoröhren-Oberfläche und das hohe Aspektverhältnis dieser quasi eindimensionalen Struktur.

Soll nun vermieden werden, dass Kohlenstoffnanoröhren in der Form von Bündeln und/oder Agglomeraten ein energetisches Minimum finden, muss ihre Verträglichkeit mit dem sie umgebenden Medium erhöht werden. Hierbei ist allerdings zu beachten, dass eine chemische, kovalente Funktionalisierung von Kohlenstoffnanoröhren ihre Verträglichkeit mit dem Medium zwar verbessern kann. Dies äußert sich zum Beispiel in einer erhöhten (thermischen) Langzeitstabilität und dem Ausbleiben von Reagglomeration während beispielsweise der Polycarbonat-Herstellung. Allerdings wird durch diese Oberflächenmodifikation auch das delokalisierte π-Elektronensystem der Röhre unterbrochen und somit die elektrische Leitfähigkeit jeder einzelnen Röhre in Abhängigkeit des Funktionalisierungsgrades erniedrigt.

Die nicht kovalente Funktionalisierung von Kohlenstoffnanoröhren durch beispielsweise Dispergieradditive stellt eine Alternative zur chemischen, kovalenten Modifikation und Verträglichmachung der Röhre mit dem Medium dar. Allerdings muss hierbei beachtet werden, dass dieser Ansatz für jedes neue Medium, egal ob Polycarbonat-Rohstoff oder -Formulierung, einer neuen Optimierung hinsichtlich der Chemie und der Konzentration des jeweiligen Dispergieradditivs bedarf und niemals eine Universallösung darstellen kann.

Zuletzt gilt zu beachten, dass jede Verarbeitung von Füllstoffen, so auch von Kohlenstoffnanoröhren, auch Risiken in der Hinsicht birgt, dass möglicherweise eine neue Eigenschaft, beispielsweise die elektrische Leitfähigkeit, erzielt werden kann, gleichzeitig allerdings mehrere andere mechanische Eigenschaften verschlechtert werden können. Dies ist vor allem dann kritisch, wenn Kohlenstoffnanoröhren in ungeschäumte, kompakte und/oder elastische Systeme eingearbeitet werden. Restagglomerate, die während des Dispergierprozesses nicht vollständig aufgebrochen werden konnten, stellen beispielsweise in einem kompakten Formteil eine Sollbruchstelle dar. Mechanische Eigenschaften wie zum Beispiel die Schlagzähigkeit und Bruchfestigkeit werden durch solche Agglomerate verschlechtert. Mit der Absicht nun, einen kompakten Werkstoff durch den Zusatz von Kohlenstoffnanoröhren elektrisch leitfähig zu machen, müssten nach dem bisherigen Stand der Technik über das gesamte Volumen des Werkstoffes Kohlenstoffnanoröhren homogen verteilt sein, sodass die Perkolationsgrenze überschritten wird und gleichzeitig keine Restagglomerate mehr vorliegen.

Diese Vorgehensweise scheitert sehr oft bereits an den dramatischen Viskositätsanstiegen, welche durch die hierfür erforderlichen Kohlenstoffnanoröhren-Konzentrationen zum Überschreiten der Perkolationsgrenze bedingt sind. Des Weiteren kann die Reagglomeration von homogen dispergierten Kohlenstoffnanoröhren während der Polycarbonat-Verarbeitung, zum Beispiel Extrusion oder Spritzguss, mit dieser Methode nicht ausgeschlossen und ohne Weiteres verhindert werden.

Weiterhin ist bekannt, dass es beim Einarbeiten von Kohlenstoffnanoröhren in Polycarbonate zu einem chemischen Abbau des Polymers aufgrund von Katalysatorresten aus der Nanoröhrensynthese kommen kann. Dieser Effekt kommt besonders während der hohen Temperaturen zum Tragen, die nötig sind, um Polycarbonat aufzuschmelzen, die Nanoröhren einzubringen und zu verteilen.

Zusätzliche zu beachtende Punkte beim Einarbeiten von Kohlenstoffnanoröhren in Thermoplaste sind einerseits die Ausrichtung der Nanoröhren entlang der Vorzugsrichtung beim Ausbringen des Polymers in die Form und die Ausbildung einer Nanoröhren-freien Oberflächenschicht. Ersteres führt dazu, dass die Perkolationsgrenze sehr hoch wird oder gar nicht mehr erreicht wird, da die Röhren überwiegend parallel ausgerichtet sind und Berührungspunkte fehlen. Letzteres bewirkt, dass so hergestellte Polycarbonatformteile keine Oberflächenleitfähigkeit mehr besitzen. Im Zusammenhang mit der Verarbeitung von Kohlenstoffnanoröhren in (thermoplastischen) Polyurethanen sind zahlreiche Arbeiten literaturbekannt, bei denen das fertige Polymer zuerst vollständig in einem organischen Lösungsmittel aufgelöst wird, anschließend die Nanoröhren-Dispergierung in dieser Polymerlösung erfolgt und die so erhaltene Nanoröhren-Dispersion auf Polyurethan/Lösungsmittelbasis zu einem Film gezogen oder in eine Form gegossen wird. Der letzte Schritt ist bei diesen Verfahren jeweils die langwierige Verdampfung der großen Mengen an Lösungsmittel.

EP 0 209 033 A1 betrifft ein Verfahren zur Herstellung von rußgefüllten Polycarbonatformkörpern, das dadurch gekennzeichnet ist, dass man Polycarbonate mit Ruß in einem Lösungsmittel für das Polycarbonat vermischt, die erhaltene Lösung bei Temperaturen unter 140°C ohne Einwirkung von Scherenergie eindampft und das resultierende Gemisch nach Verdichtung oder Kompaktierung in üblicher Weise extrudiert oder spritzgießt.

EP 0 561 240 A2 betrifft eine direkte Einarbeitung von hochstrukturierten Rußen bei der Compoundierung in ein Polycarbonat.

Eine mögliche Alternative stellt der Ansatz dar, nicht die gesamte Polymermatrix, sondern nur eine unmittelbar an die Oberfläche angrenzende Materialschicht mit den Partikeln auszustatten. Wünschenswert wäre ein solches Vorgehen, um die eingangs beschriebenen Nachteile des Lösungsmittelverbrauchs und des Viskositätsanstiegs zu vermeiden.

WO 2008/150867 A2 offenbart ein Verfahren zum Einbetten von Partikeln in ein Substrat. In diesem Verfahren wird auf mindestens einem Teil des Substrats ein Fluid appliziert, welches eine Population von Partikeln mit wenigstens einer charakteristischen Dimension im Bereich von ungefähr 0,1 nm bis ungefähr 1 cm umfasst. Das Applizieren geschieht in einer Weise, dass das Substrat bis zu einem Grade erweicht, dass eine Mehrzahl von Partikeln wenigstens teilweise in dem erweichten Bereich des Substrats eingebettet wird. Anschließend wird wenigstens ein Teil des Substrats gehärtet, so dass wenigstens ein Partikel sicher im Substrat eingebettet wird. Es wird ausgeführt, dass die Anwendung von Wärme die Einbettung von Partikeln unterstützen kann. Das Einbetten von Kohlenstoffpartikeln wie Kohlenstoffnanoröhren in Polycarbonate wird nicht konkret beschrieben. Die Beispiele in dieser Patentanmeldung behandeln das Einbetten von Silber-Nanopartikeln in Polyvinylchlorid.

WO 2005/061597 A2 betrifft ein Verfahren zum Behandeln eines Kunststoffartikels. Wenigstens ein Teil der Oberfläche des Kunststoffartikels, zum Beispiel ein geformter Gegenstand aus thermoplastischem Polycarbonat, wird mit einer Behandlungszusammensetzung kontaktiert. Diese Zusammensetzung enthält Wasser, wenigstens ein Lösungsmittel wie Ethylenglykolmonobutylether, ein Diol wie Diethylenglykol und wenigstens ein Additiv wie zum Beispiel ein UV-Stabilisator. Während des Kontakts mit der Behandlungszusammensetzung diffundiert oder penetriert das Additiv in den Kunststoffartikel. Ein behandelter Kunststoffartikel mit verbesserten physikalischen Eigenschaften wie erhöhter UV-Beständigkeit wird erhalten. Leitfähige Partikel als Additive werden jedoch nicht erwähnt.

Es besteht folglich weiterhin der Bedarf an verbesserten Verfahren, um elektrisch leitfähige Kohlenstoffteilchen in Polycarbonatoberflächen einzubringen.

Erfindungsgemäß vorgeschlagen wird daher ein Verfahren zum Einbringen von elektrisch leitfähigen Teilchen in eine Polycarbonat umfassende Oberflächenschicht, umfassend die Schritte:
(A) Bereitstellen einer Zubereitung von nicht aggregierten Kohlenstoffteilchen mit einem mittleren Teilchendurchmesser von ≥ 0,3 nm bis ≤ 3000 nm in einem Lösungsmittel, welches in der Lage ist, das Aufquellen einer Polycarbonat umfassenden Oberflächenschicht zu bewirken;
(B) Kontaktieren der Polycarbonat umfassenden Oberflächenschicht mit der Zubereitung der Kohlenstoffteilchen;
(C) Einwirken der Zubereitung der Kohlenstoffteilchen auf die Polycarbonat umfassende Oberflächenschicht für eine Zeitdauer von ≥ 0,1 Sekunden bis ≤ 30 Minuten,
dadurch gekennzeichnet, dass es sich bei den Kohlenstoffteilchen um Kohlenstoff-Nanoröhren, einwandige Kohlenstoff-Nanoröhren und/oder mehrwandige Kohlenstoff-Nanoröhren handelt.

Elektrisch leitfähige Teilchen im Sinne der vorliegenden Erfindung sind zunächst alle Teilchen aus einem Material, welches kein Isolator ist. Typischerweise werden als Isolatoren Substanzen bezeichnet, welche eine elektrische Leitfähigkeit von weniger als 10⁻⁸ S/m aufweisen. Die Teilchen werden in eine Polycarbonat umfassende Oberflächenschicht eingebracht, was bedeutet, dass nicht unbedingt nur die Oberfläche selbst mit den Teilchen belegt wird, sondern auch das unmittelbar unterhalb der Oberfläche liegende Material die Teilchen aufnimmt. Demzufolge bedeutet im Rahmen der Erfindung der Begriff der Oberflächenschicht, im Gegensatz zur zweidimensionalen Oberfläche, eine dreidimensionale Materialschicht, welche die Oberfläche als eine ihrer Begrenzungen mit einschließt. Die Oberflächenschicht wird zum Inneren des betreffenden Gegenstands zumindest dadurch abgegrenzt, dass sie eben die elektrisch leitfähigen Partikel enthält.

Das Polycarbonat (PC) selbst kann zunächst jedes beliebige Polycarbonat sein und die üblichen Zusätze wie Füllstoffe, Flammschutzmittel und dergleichen enthalten. Beispiele für Polycarbonatklassen sind PC-Schäume und kompakte Polycarbonate.

Es ist möglich und bevorzugt, dass die Oberflächenschicht zu einem Polycarbonat umfassenden Formteil oder Halbzeug wie Folien, Röhren oder Platten zugehörig ist.

Schritt (A) beinhaltet das Bereitstellen einer Zubereitung von nicht aggregierten Kohlenstoffteilchen. Dieses bedeutet, dass die Teilchen in dem Lösungsmittel vereinzelt vorliegen oder zumindest so wenig aggregiert sind, dass die Zubereitung stabil ist. In einer stabilen Zubereitung tritt hierbei in einer Lagerung bei Raumtemperatur für einen Zeitraum von mindestens einem Tag, vorzugsweise eine Woche oder vier Wochen, keine Ausflockung oder Ausfällung der Kohlenstoffteilchen ein. Um eine solche Zubereitung herzustellen, können die vorhandenen Aggregate der Kohlenstoffteilchen durch Energieeintrag, beispielsweise mittels Ultraschall, Mahlprozesse oder hohen Scherkräften, aufgebrochen werden. Letztendlich wird das Lösungsmittel danach ausgewählt, dass es sowohl die Zubereitung der Kohlenstoffteilchen bilden kann, als auch die Polycarbonatoberfläche zum Quellen bringen kann.

Der mittlere Teilchendurchmesser kann auch in einem Bereich von ≥ 1 nm bis ≤ 1000 nm oder von ≥ 3 nm bis ≤ 100 nm liegen. Die Bestimmung kann beispielsweise mittels Rasterelektronenmikroskopie oder dynamischer Lichtstreuung erfolgen.

Das Lösungsmittel kann ein wässriges oder ein nicht-wässriges Lösungsmittel sein. Im letzteren Fall ist es vorzugsweise ein polares, aprotisches Lösungsmittel. Auf diese Weise kann das Lösungsmittel gut mit dem Polycarbonat wechselwirken. Der Begriff "nicht-wässrig" bedeutet, dass dem Lösungsmittel kein zusätzliches Wasser hinzugefügt wurde, schließt aber die technisch unvermeidlichen Wasserspuren, beispielsweise bis zu einer Menge von ≤ 5 Gewichts-%, vorzugsweise ≤ 3 Gewichts-% und mehr bevorzugt ≤ 1 Gewichts-%, nicht aus.

Ist das Lösungsmittel ein wässriges Lösungsmittel, so können die Kohlenstoffteilchen durch Zugabe von Tensiden oder anderen oberflächenaktiven Stoffen desagglomeriert und in Dispersion gehalten werden.

Die Kohlenstoffteilchen können in dem Lösungsmittel in einer Konzentration von beispielsweise ≥ 0,01 Gewichts-% bis ≤ 20 Gewichts-%, ≥0,1 Gewichts-% bis ≤ 15 Gewichts-% oder ≥ 0,5 Gewichts-% bis ≤ 10 Gewichts-% vorliegen.

Das Kontaktieren der Polycarbonat umfassenden Oberflächenschicht mit der Zubereitung der Kohlenstoffteilchen in Schritt (B) erfolgt naturgemäß über die Oberfläche des Polycarbonats.

Im darauffolgenden Schritt (C) wirkt die Zubereitung der Kohlenstoffteilchen auf die Oberflächenschicht ein. Ohne auf eine Theorie festgelegt zu sein, wird angenommen, dass hierbei die Oberflächenschicht des Polycarbonats aufquillt, sich Poren in der Oberflächenschicht bilden und dass Kohlenstoffteilchen in diese Poren hineinwandern können. Die Teilchen können beispielsweise bis zu einer Tiefe von ≤ 150 µm, ≤ 100 µm oder ≤ 60 µm in die Oberflächenschicht eindringen.

Im Gegensatz zu lösungsbasierten Verfahren wird die Einwirkzeit so gewählt, dass das Polycarbonat der Oberflächenschicht nicht in Lösung überführt wird. Hierin mit eingeschlossen sind technisch unvermeidliche Lösungsvorgänge, bei denen beispielsweise ≤ 1 Gewichts-%, ≤ 0,1 Gewichts-% oder ≤ 0,01 Gewichts-% des Polycarbonats in das Lösungsmittel übergehen. Das erfindungsgemäße Verfahren ist aber gerade kein Verfahren, bei dem zunächst das Polymer homogen gelöst wird und dann zusammen mit Nanopartikeln durch Entfernen des Lösungsmittels die fertigen Partikel in der Matrix erhalten werden. Vielmehr wird die Einwirkzeit so gewählt, dass ein Aufquellen oder Anlösen der Polymeroberfläche stattfinden kann. Erfindungsgemäß geeignete Einwirkzeiten sind ≥ 0,1 Sekunden bis ≤ 30 Minuten, vorzugsweise ≥ 3 Sekunden bis ≤ 10 Minuten, mehr bevorzugt ≥ 5 Sekunden bis ≤ 3 Minuten.

Nach Schritt (C) wird das Einwirken der Zubereitung der Kohlenstoffteilchen auf die Oberflächenschicht beendet. Somit wird also die Zubereitung der Kohlenstoffteilchen von der Oberflächenschicht wieder getrennt. Anschließend kann die Oberflächenschicht gespült werden, um anhaftende Zubereitung zu entfernen. Dieses kann unter anderem dadurch geschehen, dass der Polycarbonat-Gegenstand mit der zu modifizierenden Oberflächenschicht aus einem Tauchbad entfernt wird. Danach kann der Gegenstand beispielsweise mit Wasser und/oder Isopropanol abgespült werden.

Vorteilhafterweise schließt sich danach ein Trocknungsschritt an, bei dem das in der aufgequollenen Oberflächenschicht befindliche Lösungsmittel entfernt wird, wobei sich die Poren im Polycarbonat schließen und die Kohlenstoffteilchen im Polymer eingeschlossen werden.

Das erfindungsgemäße Verfahren bietet somit die Möglichkeit, gezielt die Oberflächenschicht eines Polycarbonatgegenstands mit elektrisch leitfähigen Partikeln zu versehen. Hierbei wird die Form des Gegenstands nicht durch Auflösen zerstört, so dass auch fertige Formteile behandelt werden können. Da die Partikel im oberflächennahen Bereich des Gegenstands konzentriert sind, wird insgesamt eine geringere Menge benötigt, um eine elektrisch leitende Polycarbonatoberfläche zu erhalten. Schließlich müssen, im Gegensatz zu lösungsbasierten Verfahren, keine großen Mengen an Lösungsmitteln entfernt werden, um das fertige modifizierte Polymer zu erhalten. Auch ist es möglich, die Konzentration der Kohlenstoffpartikel in einem Bereich zu halten, bei dem kein technisch nachteiliger Viskositätsanstieg eintritt.

Eine vorteilhafte Anwendung des erfindungsgemäßen Verfahrens ist die Behandlung von Polycarbonat-Formteilen, welche anschließend durch eine elektrostatische Pulverbeschichtung lackiert werden sollen oder die galvanisiert werden sollen. Die elektrisch leitfähigen Teilchen in der Oberflächenschicht sorgen hierbei für einen verbesserten elektrostatischen Pulverauftrag. Eine weitere Anwendung betrifft das Behandeln von Polycarbonat-Formteilen zur Vorbereitung einer Elektrotauchlackierung. Es lassen sich auch leitfähige Elektrodenmaterialien oder elastische Polycarbonat-Kondensatoren erhalten. Weiterhin können elektronische Bauteile oder Kabelummantelungen mit einer antistatischen Beschichtung versehen werden.

In einer bevorzugten Ausführungsform des erfindungsgemäßen Verfahrens findet das Einwirken der Zubereitung der Kohlenstoffteilchen auf die Polycarbonat umfassende Oberflächenschicht unter Einsatz von Wärme statt. Der Energieeintrag durch Wärme wirkt zum einen der Bildung von Partikelaggregaten entgegen und ermöglicht somit höhere Partikelkonzentrationen in der Zubereitung. Weiterhin wird das Einbringen der Partikel in die Polycarbonat-Oberflächenschicht beschleunigt. Bei einer Erwärmung während der Einwirkung kann die Temperatur beispielsweise ≥ 30 °C bis ≤ 200 °C, bevorzugt ≥ 40 °C bis ≤ 150 °C betragen.

In einer weiteren Ausführungsform des erfindungsgemäßen Verfahrens werden die Kohlenstoffteilchen im Anschluss an ihre Herstellung an ihrer Oberfläche nicht kovalent funktionalisiert. Dieses bedeutet, dass die Teilchen keine zusätzlichen, über weitere Reaktionsschritte kovalent angebundenen funktionellen Gruppen an ihrer Oberfläche tragen. Insbesondere vermieden wird der Einsatz von Oxidationsmitteln wie Salpetersäure, Wasserstoffperoxid, Kaliumpermanganat und Schwefelsäure oder eine mögliche Mischung dieser Mittel für die Funktionalisierung der Kohlenstoffteilchen. Vorteilhaft am Einsatz nicht kovalent funktionalisierter Teilchen ist, dass das π-Elektronensystem der Oberfläche nicht gestört wird und daher uneingeschränkt zur elektrischen Leitfähigkeit beitragen kann.

In dem erfindungsgemäßen Verfahren sind die Kohlenstoffteilchen Kohlenstoff-Nanoröhren, einwandige Kohlenstoff-Nanoröhren und/oder mehrwandige Kohlenstoff-Nanoröhren. Diese Teilchen können neben einer Erhöhung der elektrischen Leitfähigkeit auch mechanische Eigenschaften der Oberflächenschicht, wie zum Beispiel Elastizität und Schlagzähigkeit, verbessern.

In einer Ausführungsform des erfindungsgemäßen Verfahrens sind Kohlenstoffnanoröhren im Sinne der Erfindung alle einwandigen oder mehrwandigen Kohlenstoffnanoröhren vom Zylinder-Typ, Scroll-Typ, Multiscroll-Typ oder mit zwiebelartiger Struktur oder Mischungen aus diesen. Bevorzugt sind mehrwandige Kohlenstoffnanoröhren vom Zylinder-Typ, Scroll-Typ, Multiscroll-Typ oder deren Mischungen einzusetzen. Günstig ist es, wenn die Kohlenstoffnanoröhren ein Verhältnis von Länge zu Außendurchmesser von ≥ 5, bevorzugt ≥100 haben.

Im Unterschied zu den bereits erwähnten bekannten Kohlenstoffnanoröhren vom Scroll-Typ mit nur einer durchgehenden oder unterbrochenen Graphenlage existieren auch Kohlenstoffnanoröhren-Strukturen, die aus mehreren Graphenlagen bestehen, welche zu einem Stapel zusammengefasst und aufgerollt vorliegen. Man spricht hierbei vom Multiscroll-Typ. Diese Kohlenstoffnanoröhren werden in DE 10 2007 044031 A1 beschrieben, auf die in vollem Umfang Bezug genommen wird. Diese Struktur verhält sich zu den Kohlenstoffnanoröhren vom einfachen Scroll-Typ vergleichsweise wie die Struktur mehrwandiger zylindrischer Kohlenstoffnanoröhren (cylindrical MWNT) zur Struktur der einwandigen zylindrischen Kohlenstoffnanoröhren (cylindrical SWNT).

Anders als bei den zwiebelartigen Strukturen (onion type structure) verlaufen die einzelnen Graphen- bzw. Graphitschichten in diesen Kohlenstoffnanoröhren im Querschnitt gesehen offenbar durchgehend vom Zentrum der Kohlenstoffnanoröhren bis zum äußeren Rand ohne Unterbrechung. Dies kann zum Beispiel eine verbesserte und schnellere Interkalierung anderer Materialien im Röhrchengerüst ermöglichen, da mehr offene Ränder als Eintrittszone der Interkalate zur Verfügung stehen im Vergleich zu Kohlenstoffnanoröhren mit einfacher Scrollstruktur (Carbon 1996, 34, 1301-3) oder CNTs mit zwiebelartiger Struktur (Science 1994, 263, 1744-7).

In einer bevorzugten Ausführungsform des erfindungsgemäßen Verfahrens sind die Kohlenstoffteilchen nicht kovalent funktionalisierte, mehrwandige Kohlenstoff-Nanoröhren mit einem Durchmesser von ≥ 3 nm bis ≤ 100 nm. Der Durchmesser bezieht sich hierbei auf den mittleren Durchmesser der Nanoröhren. Er kann auch in einem Bereich von ≥ 5 nm bis ≤ 80 nm und vorteilhafterweise von ≥ 6 nm bis ≤ 60 nm liegen. Die Länge der Nanoröhren ist zunächst nicht begrenzt. Sie kann aber beispielsweise in einem Bereich von ≥ 1 µm bis ≤ 100 µm und vorteilhafterweise von ≥ 10 µm bis ≤ 30 µm liegen.

In einer weiteren Ausführungsform des erfindungsgemäßen Verfahrens ist das Polycarbonat erhältlich aus der Reaktion von Bisphenol A und/oder 1,1-Bishydroxyphenyl-3,3,5-trimethylcyclohexan (TMC-Bisphenol) mit einem Kohlensäureester-Derivat. Bevorzugte Kohlensäureester-Derivate sind Phosgen und/oder Diphenylcarbonat.

In einer weiteren Ausführungsform des erfindungsgemäßen Verfahrens ist das Lösungsmittel ausgewählt aus der Gruppe umfassend Methanol, Ethanol, Isopropanol, Butanol, Ethylenglykol, Propylenglykol, Butylenglykol, Glycerin, Hydrochinon, Aceton, Ethylacetat, Trichlorethylen, Trichlorethan, Trichlormethan, Methylenchlorid, Cyclohexanon, N,N-Dimethylformamid, Dimethylsulfoxid, Tetrahydrofuran, N-Methyl-2-pyrrolidon, Benzol, Toluol, Chlorbenzol, Styrol, Methylethylketon, Ethylenglykolmonobutylether, Diethylenglykol, Gemische der vorgenannten Lösungsmittel untereinander und/oder Mischungen der vorgenannten Lösungsmittel mit Wasser.

Diese Lösungsmittel vereinigen in besonderer Weise die Fähigkeit, aggregatarme oder aggregatfreie Zubereitungen mit den Kohlenstoffteilchen zu bilden und dabei gleichzeitig zu einem Aufquellen der Polycarbonatoberfläche zu führen. Mischungen der vorgenannten Lösungsmittel betreffen solche Fälle, in denen das Lösungsmittel im gewünschten Massenanteil auch in Wasser löslich ist.

In einer weiteren Ausführungsform des erfindungsgemäßen Verfahrens erfolgt das Kontaktieren der Polycarbonat umfassenden Oberflächenschicht mit der Zubereitung der Kohlenstoffteilchen durch Eintauchen, Auftragen, Bedrucken, Bestreichen, Besprühen und/oder Begießen. Durch Eintauchen in ein Tauchbad lassen sich beispielsweise Gegenstände leicht vollständig behandeln. Auch kann leicht ein kontinuierlicher Prozess zur Herstellung eines so behandelten Polymerfilms realisiert werden. Das Bedrucken von Polycarbonat-Gegenständen, zum Beispiel im Siebdruckverfahren, erlaubt das Darstellen von elektrisch leitfähigen Strukturen wie Leiterbahnen am Polycarbonat-Gegenstand.

In einer weiteren Ausführungsform des erfindungsgemäßen Verfahrens ist zumindest in Schritt (C) die Polycarbonat umfassende Oberfläche teilweise durch eine Maske abdeckt. Durch die Maske werden Teilbereiche der Oberfläche abgedeckt und andere Bereiche freigelassen. Auf diese Weise lassen sich elektrisch leitfähige Strukturen auf der Elastomeroberfläche wie Leiterbahnen und dergleichen darstellen. Eine andere Einsatzmöglichkeit für die Verwendung einer Maske ist, isolierende Flächen an den Kanten eines Werkstücks zu erhalten.

Die durch das erfindungsgemäße Verfahren erhaltene Polycarbonat-Schicht kann beispielsweise einen spezifischen Widerstand der Oberflächenschicht von ≥ 10⁻³ Ohm cm bis ≤ 10⁸ Ohm cm aufweisen. Der spezifische Oberflächenwiderstand lässt sich anhand der Norm ASTM D 257 bestimmen. Vorzugsweise liegt dieser Widerstand in einem Bereich von ≥ 10⁻² Ohm cm bis ≤ 10⁶ Ohm cm, mehr bevorzugt von ≥ 10⁻¹ Ohm cm bis ≤ 10⁵ Ohm cm. Die zur Berechnung des spezifischen Oberflächenwiderstands benötigte Schichtdicke der Kohlenstoffteilchen umfassenden Schicht lässt sich aus elektronenmikroskopischen Querschnittsaufnahmen ermitteln.

Die vorliegende Erfindung betrifft ebenfalls einen Polycarbonat-Gegenstand mit einer durch ein erfindungsgemäßes Verfahren erhältlichen, elektrisch leitfähige Kohlenstoffteilchen umfassenden Oberflächenschicht, wobei die Kohlenstoffteilchen in dem Polycarbonat bis zu einer Tiefe von ≤ 150 µm unterhalb der Oberfläche angeordnet vorliegen und die Kohlenstoffteilchen innerhalb des sie umfassenden Polycarbonatmaterials der Oberflächenschicht in einem Anteil von ≥ 0,1 Gewichts-% bis ≤ 10 Gewichts-% vorliegen. Wie bereits ausgeführt, umfasst die Oberflächenschicht Polycarbonat. Vorteilhafterweise bilden die Teilchen in dieser Oberflächenschicht ein Netzwerk aus, so dass eine elektrische Leitfähigkeit eintritt. Die Teilchen können auch bis zu einer Tiefe von ≤ 100 µm oder ≤ 60 µm unterhalb der Oberfläche angeordnet vorliegen. Erfindungsgemäß mit eingeschlossen sind auch Gegenstände, welche die mit Kohlenstoffteilchen ausgestattete Polycarbonat-Oberflächenschicht umfassen und zusätzlich noch weitere Materialien aufweisen. Es kann sich beispielsweise um Gebrauchsgegenstände handeln, welche zumindest teilweise eine Polycarbonat-Oberfläche umfassen und wobei in diese Oberfläche beziehungsweise Polycarbonat-Oberflächenschicht die elektrisch leitfähigen Kohlenstoffteilchen eingebracht wurden.

Exemplarisch für die erwähnten Polycarbonat-Gegenstände seien Polycarbonat-Formteile genannt, welche anschließend durch eine elektrostatisches Pulverbeschichtung oder Elektrotauchlackierung lackiert werden sollen oder die galvanisiert werden sollen. Andere Beispiele sind leitfähige sowie leitfähige und elastische Elektrodenmaterialien, allgemein elektronische Bauteile oder Kabelummantelungen mit einer antistatischen Beschichtung. Ebenfalls exemplarisch seien Gegenstände genannt, bei denen eine gute Wärmeabfuhr nötig ist.

Vorzugsweise liegen die Kohlenstoffteilchen in der Oberflächenschicht nicht oder wenig aggregiert vor. Hierbei bedeutet "wenig aggregiert", dass Aggregate vorliegen, deren Dimensionen höchstens das ≤ 5-Fache der entsprechenden Dimensionen des einzelnen Teilchens betragen. Beispielsweise würde ein Aggregat aus Kohlenstoffnanoröhren höchstens die ≤ 5-fache Länge und/oder die ≤ 5-fache Breite der einzelnen Kohlenstoffnanoröhre einnehmen.

In dem erfindungsgemäßen Polycarbonat-Gegenstand liegen die Kohlenstoffteilchen innerhalb des sie umfassenden Polycarbonatmaterials der Oberflächenschicht in einem Anteil von ≥ 0,1 Gewichts-% bis ≤ 10 Gewichts-% vor. Der Anteil kann auch in einem Bereich von ≥ 0,5 Gewichts-% bis ≤ 4 Gewichts-% oder von ≥ 1 Gewichts-% bis ≤ 5 Gewichts-% liegen. Letztendlich wird hierdurch also der Gehalt an Kohlenstoffteilchen in der Oberflächenschicht angegeben. Die Grenze der Oberflächenschicht im Inneren des Gegenstands, ab der das Polycarbonatmaterial nicht mehr in die Berechnung einfließt, wird durch die unterste (innerste) Linie, bis zu der die Kohlenstoffteilchen im Polycarbonat vorkommen, gebildet. Innerhalb der angegebenen Bereiche lässt sich die Perkolationsgrenze für die Kohlenstoffteilchen überschreiten, so dass die elektrische Leitfähigkeit stark verbessert wird.

In einer weiteren Ausführungsform des Polycarbonat-Gegenstands weist die die Kohlenstoffteilchen umfassende Oberflächenschicht einen spezifischen Widerstand von ≥ 10⁻³ Ohm cm bis ≤ 10⁸ Ohm cm auf. Der spezifische Widerstand lässt sich anhand der Norm ASTM D 257 bestimmen. Vorzugsweise liegt dieser Widerstand in einem Bereich von ≥ 10⁻² Ohm cm bis ≤ 10⁶ Ohm cm, mehr bevorzugt von ≥ 10⁻¹ Ohm cm bis ≤ 10⁵ Ohm cm. Die zur Berechnung des spezifischen Widerstands benötigte Schichtdicke der Kohlenstoffteilchen umfassenden Schicht lässt sich aus elektronenmikroskopischen Querschnittsaufnahmen ermitteln.

In einer weiteren Ausführungsform des Polycarbonat-Gegenstands sind die Kohlenstoffteilchen unfunktionalisierte, mehrwandige Kohlenstoff-Nanoröhren mit einem Durchmesser von ≥ 3 nm bis ≤ 100 nm. Der Durchmesser bezieht sich hierbei auf den mittleren Durchmesser der Nanoröhren. Er kann auch in einem Bereich von ≥ 5 nm bis ≤ 80 nm und vorteilhafterweise von ≥ 6 nm bis ≤ 60 nm liegen. Die Länge der Nanoröhren ist zunächst nicht begrenzt. Sie kann aber beispielsweise in einem Bereich von ≥ 1 µm bis ≤ 100 µm und vorteilhafterweise von ≥ 10 µm bis ≤ 30 µm liegen.

In einer weiteren Ausführungsform des Polycarbonat-Gegenstands weist dieser eine erste und eine zweite elektrisch leitfähige Kohlenstoffteilchen umfassende Oberflächenschicht auf, wobei die besagte erste und zweite Oberflächenschicht einander gegenüberliegend angeordnet sind und durch eine Polycarbonatschicht voneinander getrennt sind. Bedingt durch das Herstellungsverfahren sind die erste und die zweite Oberflächenschicht integral mit der trennenden, elektrisch isolierenden Polycarbonatschicht verbunden. Durch solch einen Aufbau von zwei durch ein Dielektrikum getrennten elektrisch leitfähigen Schichten kann ein elastischer Kondensator realisiert werden.

Der erfindungsgemäße Polycarbonat-Gegenstand kann weiterhin als Verbund eines Trägermaterials mit der elektrisch leitfähige Kohlenstoffteilchen umfassenden Polycarbonat-Oberflächenschicht vorliegen. Beispiele für Trägermaterialien sind Keramiken, Metalle, aber auch andere Polymere wie Polycarbonate oder Polyolefine. So kann beispielsweise ein Metall-Formteil zunächst mit Polycarbonat beschichtet werden und anschließend die Polycarbonat-Oberflächenschicht mit den Kohlenstoffteilchen versehen werden.

Ein weiterer Gegenstand der vorliegenden Erfindung ist die Verwendung eines erfindungsgemäßen Polycarbonat-Gegenstands für antistatische Verpackungen, als Träger für elektronische Bauteile, zur Abschirmung gegen elektromagnetische Felder, zur Oberflächenmodifikation von Bauteilen und/oder als mechanisches Verstärkungselement. Zum Beispiel kann eine Verwendung in Sortieranlagen für elektronische Bauteile zur Verhinderung der statischen Aufladung in Frage kommen. Bei der Oberflächenmodifikation von Bauteilen kann beispielsweise eine Folie aus dem erfindungsgemäßen Polycarbonat-Gegenstand hinterspritzt oder aber auflaminiert werden. Man erhält so Bauteile mit einem verringerten elektrischen Oberflächenwiderstand.

Die vorliegende Erfindung wird anhand der nachfolgenden Ausführungsbeispiele in Verbindung mit den Figuren weiter erläutert. Es zeigen:
- FIG. 1: einen Polycarbonat-Gegenstand mit einem dreischichtigen Aufbau
- FIG. 2: eine Rasterkraftmikroskop-Aufnahme eines Probenquerschnitts
- FIG. 3: eine weitere Rasterkraftmikroskop-Aufnahme eines Probenquerschnitts

### Ausführungsbeispiele:

In den Ausführungsbeispielen kamen folgende Substanzen zum Einsatz:
Polycarbonat: Hochtemperatur-Polycarbonat mit einer Vicat-Erweichungstemperatur von 183 °C (nach DIN ISO 306) und einer Schmelze-Volumenfließrate von 18 cm³/10 Minuten (nach DIN ISO 1133 bestimmt bei 330 °C und mit 2,16 kg Belastung), erhältlich unter dem Handelsnamen Apec 1985® von Bayer MaterialScience AG, Leverkusen.

CNT: mehrwandige Kohlenstoffnanoröhren mit 3 bis 15 Wänden, einem mittleren Außendurchmesser von 13 bis 16 nm und einer Länge von 1 bis > 10 µm, erhältlich unter dem Handelsnamen Baytubes® C 150 P von Bayer MaterialScience AG, Leverkusen

Lösungsmittel: 2-Butanon (Methylethylketon, MEK), erhältlich von Sigma-Aldrich.

Die Tauchzubereitung wurde durch Beschallung einer definierten Menge CNTs im Lösungsmittel mittels Ultraschalllanze oder Ultraschallbad hergestellt und unmittelbar eingesetzt.

Zur Funktionalisierung der Polycarbonat-Oberflächen wurden die Proben vollständig in die Tauchzubereitung für wenige Sekunden bei Raumtemperatur eingetaucht. Nach der Entnahme wurde die Probe bei Raumtemperatur vollständig getrocknet und anschließend mit einer Wasser-Isopropanol-Mischung (1:1) abgerieben.

An so behandelten Polycarbonat-Proben wurden Oberflächen- und Volumenwiderstände gemessen (ASTM D 257).

Die Versuchsbedingungen und die erhaltenen Ergebnisse sind in den nachfolgenden Tabellen wiedergegeben.

| Beispiel | c (CNT) in Tauchzubereitung [Gew.-%] | Lösungsmittel | Tauchzeit [s] |
|---|---|---|---|
| P1^{#} | 0 | - | - |
| P2^{#} | 0 | MEK | 10 |
| P3 | 0,05 | MEK | 10 |
| P4 | 0,1 | MEK | 10 |
| P5 | 0,5 | MEK | 10 |
| P6 | 0,5 | MEK | 5 |

| | | | |
|---|---|---|---|
| ^{#}: Vergleichsbeispiel | | | |

| Beispiel | Volumenwiderstand [Ohm cm] | Oberflächenwiderstand R [Ohm/square] | spezifischer Widerstand p [Ohm cm] * |
|---|---|---|---|
| P1^{#} | 5,9 · 10¹⁷ | 1,1 · 10²¹ | 6,4 · 10¹⁸ |
| P2^{#} | 2,7 · 10¹⁶ | 1,6 · 10¹⁷ | 9,8 · 10¹⁴ |
| P3 | 4,9 · 10¹⁷ | 3,5 · 10¹⁷ | 2,1 · 10¹⁵ |
| P4 | 3,9 · 10¹⁷ | 8,6 · 10¹⁷ | 5,1 · 10¹⁵ |
| P5 | 2,7 · 10⁷ | 1,2 · 10⁶ | 7,2 · 10³ |
| P6 | 1,8 · 10⁷ | 6,5 · 10⁵ | 3,9 · 10³ |

| | | | |
|---|---|---|---|
| *: berechnet nach ρ = R · d, mit der Schichtdicke d = 60 µm; ^{#}: Vergleichsbeispiel | | | |

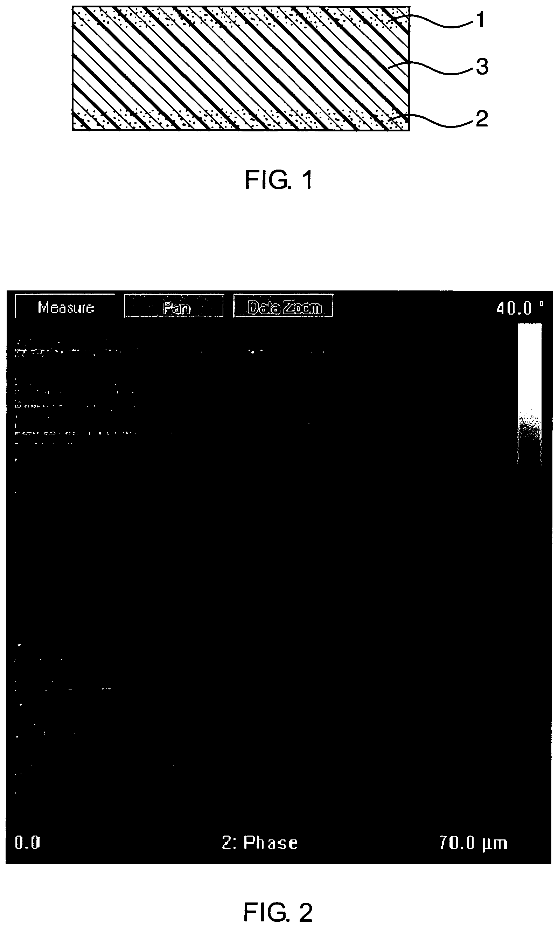

FIG. 1 zeigt schematisch einen erfindungsgemäßen Polycarbonat-Gegenstand mit dreischichtigem Aufbau. Ausgehend von einem Polycarbonat-Werkstück wurden in die obere (1) und die untere (2) Oberflächenschicht des Polycarbonats Kohlenstoffnanoröhren eingebracht. Diese Nanoröhren sind durch Striche oder Punkte in den jeweiligen Schichten (1, 2) dargestellt. Man erkennt, dass die Nanoröhren eine begrenzte Eindringtiefe in die Oberflächenschichten aufweisen. Die Oberflächenschichten sind durch eine nanoröhrenfreie Polycarbonatschicht (3) voneinander getrennt. Aufgrund des Herstellungsverfahrens ist der Polycarbonat-Gegenstand in Hinblick auf die die Oberflächenschichten (1, 2) immer noch einstückig aufgebaut und die Oberflächenschichten sind stoffschlüssig mit der nanoröhrenfreien Schicht (3) verbunden. Der gezeigte Polycarbonat-Gegenstand kann, bei geeigneten Abmessungen, beispielsweise als filmförmiger Kondensator dienen.

Eine Probe des in Beispiel P6 erhaltenen Polycarbonat-Gegenstands wurde mittels Rasterkraftmikroskop- (AFM-) Aufnahmen untersucht. FIG. 2 zeigt einen Bildausschnitt dieser Probe in Querschnittsansicht und im phasensensitiven Modus. Die Breite des dargestellten Bildausschnitts beträgt 70 µm. Die mit Kohlenstoffnanoröhren kontaktierte Oberfläche befindet sich im linken Teil der Aufnahme. Im rechten Teil befindet sich das unveränderte Polycarbonatmaterial. Man erkennt die eingebetteten Kohlenstoffnanoröhren als dunkle Linien. Insgesamt sieht man also, dass die Nanoröhren auch unterhalb der Oberfläche des Polycarbonats vorliegen. Die Eindringtiefe beträgt circa 60 µm.

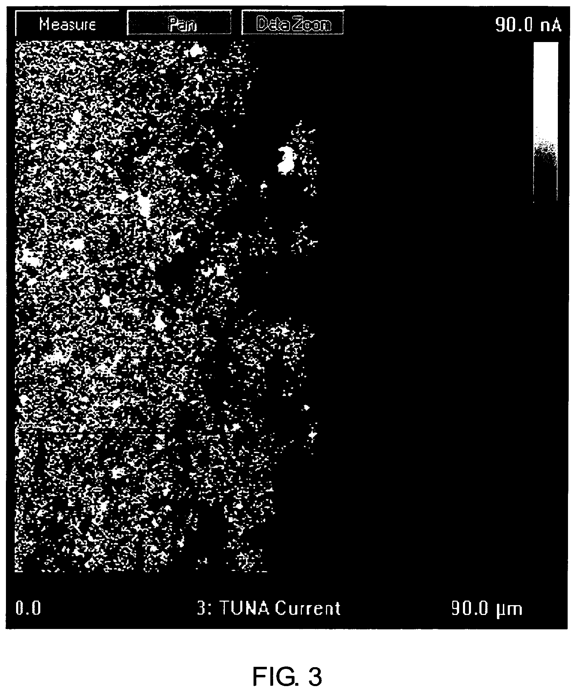

Informationen über das Vorliegen und die Anordnung der Kohlenstoffnanoröhren liefert die Tunnel-AFM-Aufnahme (TUNA) in FIG. 3. Hierbei handelt es sich auch um einen Probenquerschnitt. Die Breite des dargestellten Bildausschnitts beträgt 90 µm. Die mit Kohlenstoffnanoröhren kontaktierte Oberfläche befindet sich im linken Teil der Aufnahme. Im rechten Teil befindet sich das unveränderte Polycarbonatmaterial. Man erkennt als helle Punkte die mit den Tunnelstrom leitenden Kohlenstoffnanoröhren durchsetzte Oberflächenschicht. Insgesamt sieht man also, dass die Nanoröhren auch unterhalb der Oberfläche des Polycarbonats vorliegen. Die Eindringtiefe beträgt circa 60 µm.

## Patentansprüche

1. Verfahren zum Einbringen von elektrisch leitfähigen Teilchen in eine Polycarbonat umfassende Oberflächenschicht, umfassend die Schritte:
(A) Bereitstellen einer Zubereitung von nicht aggregierten Kohlenstoffteilchen mit einem mittleren Teilchendurchmesser von ≥ 0,3 nm bis ≤ 3000 nm in einem Lösungsmittel, welches in der Lage ist, das Aufquellen einer Polycarbonat umfassenden Oberflächenschicht zu bewirken;
(B) Kontaktieren der Polycarbonat umfassenden Oberflächenschicht mit der Zubereitung der Kohlenstoffteilchen;
(C) Einwirken der Zubereitung der Kohlenstoffteilchen auf die Polycarbonat umfassende Oberflächenschicht für eine Zeitdauer von ≥ 0,1 Sekunden bis ≤ 30 Minuten,
**dadurch gekennzeichnet, dass** es sich bei den Kohlenstoffteilchen um Kohlenstoff-Nanoröhren, einwandige Kohlenstoff-Nanoröhren und/oder mehrwandige Kohlenstoff-Nanoröhren handelt.

2. Verfahren gemäß Anspruch 1, wobei das Einwirken der Zubereitung der Kohlenstoffteilchen auf die Polycarbonat umfassende Oberflächenschicht unter Einsatz von Wärme stattfindet.

3. Verfahren gemäß Anspruch 1, wobei die Kohlenstoffteilchen im Anschluss an ihre Herstellung an ihrer Oberfläche nicht kovalent funktionalisiert werden.

4. Verfahren gemäß Anspruch 1, wobei es sich bei den Kohlenstoff-Nanoröhren um einwandige oder mehrwandige Kohlenstoffnanoröhren vom Zylinder-Typ, Scroll-Typ, Multiscroll-Typ oder mit zwiebelartiger Struktur oder Mischungen aus diesen handelt.

5. Verfahren gemäß Anspruch 1, wobei die Kohlenstoffteilchen nicht kovalent funktionalisierte, mehrwandige Kohlenstoff-Nanoröhren mit einem Durchmesser von ≥ 3 nm bis ≤ 100 nm sind.

6. Verfahren gemäß Anspruch 1, wobei das Polycarbonat erhältlich ist aus der Reaktion von Bisphenol A und/oder 1,1-Bishydroxyphenyl-3,3,5-trimethylcyclohexan mit einem Kohlensäureester-Derivat.

7. Verfahren gemäß Anspruch 1, wobei das Lösungsmittel ausgewählt ist aus der Gruppe umfassend Methanol, Ethanol, Isopropanol, Butanol, Ethylenglykol, Propylenglykol, Butylenglykol, Glycerin, Hydrochinon, Aceton, Ethylacetat, Trichlorethylen, Trichlorethan, Trichlormethan, Methylenchlorid, Cyclohexanon, N,N-Dimethylformamid, Dimethylsulfoxid, Tetrahydrofuran, N-Methyl-2-pyrrolidon, Benzol, Toluol, Chlorbenzol, Styrol, Methylethylketon, Ethylenglykolmonobutylether, Diethylenglykol, Gemische der vorgenannten Lösungsmittel untereinander und/oder Mischungen der vorgenannten Lösungsmittel mit Wasser.

8. Verfahren gemäß Anspruch 1, wobei das Kontaktieren der Polycarbonat umfassenden Oberflächenschicht mit der Zubereitung der Kohlenstoffteilchen durch Eintauchen, Auftragen, Bedrucken, Bestreichen, Besprühen und/oder Begießen erfolgt.

9. Verfahren gemäß Anspruch 1, wobei zumindest in Schritt (C) die Polycarbonat umfassende Oberfläche teilweise durch eine Maske abdeckt ist.

10. Polycarbonat-Gegenstand mit einer durch ein Verfahren gemäß einem der Ansprüche 1 bis 9 erhältlichen, elektrisch leitfähige Kohlenstoffteilchen umfassenden Oberflächenschicht (1), wobei die Kohlenstoffteilchen in dem Polycarbonat bis zu einer Tiefe von ≤ 150 µm unterhalb der Oberfläche angeordnet vorliegen und die Kohlenstoffteilchen innerhalb des sie umfassenden Polycarbonatmaterials der Oberflächenschicht (1) in einem Anteil von ≥ 0,1 Gewichts-% bis ≤ 10 Gewichts-% vorliegen.

11. Polycarbonat-Gegenstand gemäß Anspruch 10, wobei die die Kohlenstoffteilchen umfassende Oberflächenschicht (1) einen spezifischen Widerstand von ≥ 10⁻³ Ohm cm bis ≤ 10⁸ Ohm cm aufweist.

12. Polycarbonat-Gegenstand gemäß Anspruch 10, wobei die Kohlenstoffteilchen nicht kovalent funktionalisierte, mehrwandige Kohlenstoff-Nanoröhren mit einem Durchmesser von ≥ 3 nm bis ≤ 100 nm sind.

13. Polycarbonat-Gegenstand gemäß Anspruch 10 mit einer ersten (1) und einer zweiten (2) elektrisch leitfähige Kohlenstoffteilchen umfassenden Oberflächenschicht, wobei die besagte erste (1) und zweite (2) Oberflächenschicht einander gegenüberliegend angeordnet sind und durch eine Polycarbonatschicht (3) voneinander getrennt sind.

14. Verwendung eines Polycarbonat-Gegenstands gemäß Anspruch 10 für antistatische Verpackungen, als Träger für elektronische Bauteile, zur Abschirmung gegen elektromagnetische Felder, zur Oberflächenmodifikation von Bauteilen und/oder als mechanisches Verstärkungselement.

## Claims

1. A method of introducing electroconductive particles into a polycarbonate-containing surface layer, comprising the steps of:
(A) providing a preparation of unaggregated carbon particles having an average particle diameter of between ≥ 0.3 nm and ≤ 3000 nm in a solvent which solvent is capable of causing the swelling of a polycarbonate-containing surface layer;
(B) contacting the polycarbonate-containing surface layer with the preparation of the carbon particles;
(C) reacting the preparation of the carbon particles with the polycarbonate-containing surface layer for a period of time of between ≥ 0.1 second and ≤ 30 minutes,
**characterized in that** the carbon particles are carbon nanotubes, single-walled carbon nanotubes and/or multi-walled carbon nanotubes.

2. The method according to claim 1, wherein the reacting the preparation of the carbon particles with the polycarbonate-containing surface layer takes place using heat.

3. The method according to claim 1, wherein, subsequent to their preparation, the carbon particles are non-covalently functionalized on their surface.

4. The method of claim 1, wherein the carbon nanotubes are single-walled or multi-walled carbon nanotubes of the cylinder type, scroll type, multi-scroll type or having an onion-like structure or mixtures thereof.

5. The method of claim 1, wherein the carbon particles are non-covalently functionalized, multi-walled carbon nanotubes having a diameter of between ≥ 3 nm and ≤ 100 nm.

6. The process according to claim 1, wherein the polycarbonate is obtainable from the reaction of bisphenol A and/or 1,1-bis-hydroxyphenyl-3,3,5-trimethylcyclohexane with a carbonic acid ester derivative.

7. The process according to claim 1, wherein the solvent is selected from the group comprising methanol, ethanol, isopropanol, butanol, ethylene glycol, propylene glycol, butylene glycol, glycerol, hydroquinone, acetone, ethyl acetate, trichloroethylene, trichloroethane, trichloromethane, methylene chloride, cyclohexanone, N,N-dimethylformamide, dimethyl sulfoxide, tetrahydrofuran, N-methyl-2-pyrrolidone, benzene, toluene, chlorobenzene, styrene, methyl ethyl ketone, ethylene glycol monobutyl ether, diethylene glycol, mixtures of the above-mentioned solvents with one another and/or mixtures of the above-mentioned solvents with water.

8. The method of claim 1, wherein contacting the polycarbonate-containing surface layer with the preparation of the carbon particles is conducted by dipping, applying, printing, brushing, spraying and/or watering.

9. The method of claim 1, wherein at least in step (C), the polycarbonate-containing surface is partially covered by a mask.

10. A polycarbonate article having a surface layer (1) obtainable by a process according to one of claims 1 to 9 and containing electroconductive carbon particles, wherein the carbon particles are arranged in the polycarbonate up to a depth of ≤ 150 µm below the surface and wherein the carbon particles are present within the polycarbonate material of the surface layer (1) containing them in a proportion of between ≥ 0.1% by weight and ≤ 10% by weight.

11. The polycarbonate article according to claim 10, wherein the surface layer (1) containing the carbon particles has a resistivity of between ≥ 10⁻³ ohm cm and ≤ 10⁸ ohm cm.

12. The polycarbonate article according to claim 10, wherein the carbon particles are non-covalently functionalized, multi-walled carbon nanotubes having a diameter of ≥ 3 nm to ≤ 100 nm.

13. The polycarbonate article according to claim 10 having a first (1) and a second (2) surface layer containing electroconductive carbon particles, said first (1) and second (2) surface layers being arranged opposite to each other and being separated by a polycarbonate layer (3).

14. Use of a polycarbonate article according to claim 10 for antistatic packagings, as a carrier for electronic components, for shielding against electromagnetic fields, for the surface modification of components and/or as a mechanical reinforcing element.

## Revendications

1. Procédé pour l'introduction de particules électro-conductrices dans une couche de surface comprenant du polycarbonate, comprenant les étapes:
(A) élaboration d'une préparation de particules de carbone non agrégées ayant un diamètre moyen des particules de ≥ 0,3 nm à ≤ 3000 nm dans un solvant qui est apte à provoquer le gonflement d'une couche de surface comprenant du polycarbonate;
(B) Mise en contact de la couche de surface comprenant du polycarbonate avec la préparation de particules de carbone;
(C) Action de la préparation de particules de carbone sur la couche de surface comprenant du polycarbonate pendant une durée de ≥ 0,1 seconde jusqu'à ≤ 30 minutes,
**caractérisé en ce qu'**il s'agit, en ce qui concerne les particules de carbone, de nanotubes de carbone monoparoi et/ou de nanotubes de carbone à parois multiples.

2. Procédé selon la revendication 1, où l'action de la préparation des particules de carbone sur la couche de surface comprenant du polycarbonate s'effectue avec introduction de chaleur.

3. Procédé selon la revendication 1, où les particules de carbone sont fonctionnalisées à la fin de leur préparation de manière non covalente sur leur surface.

4. Procédé selon la revendication 1, où en ce qui concerne les nanotubes de carbone il s'agit de nanotubes de carbone monoparoi ou multiparois de type cylindrique, de type à enroulement, de type à enroulements multiples ou ayant une structure en pelure d'oignon ou de mélanges de ceux-ci.

5. Procédé selon la revendication 1, où les particules de carbone sont des nanotubes de carbone à plusieurs parois fonctionnalisées de manière non covalente, ayant un diamètre de ≥ 3 nm jusqu'à ≤ 100 nm.

6. Procédé selon la revendication 1, où le polycarbonate peut être obtenu par la réaction de bisphénol A et/ou de 1,1-bishydroxyphényl-3,3,5-triméthylcyclohexane avec un dérivé ester de l'acide carbonique.

7. Procédé selon la revendication 1, où le solvant est choisi dans le groupe comprenant méthanol, éthanol, isopropanol, butanol, éthylèneglycol, propylèneglycol, butylèneglycol, glycérol, hydroquinone, acétone, acétate d'éthyle, trichloréthylène, trichloroéthane, trichlorométhane, chlorure de méthylène, cyclohexanone, N,N-diméthylformamide, diméthylsulfoxyde, tétrahydrofuranne, N-méthyl-2-pyrrolidone, benzène, toluène, chlorobenzène, styrène, méthyléthylcétone, éther monobutylique d'éthylèneglycol, diéthylèneglycol, mélanges des solvants susdits entre eux et/ou mélanges de solvants susdits avec de l'eau.

8. Procédé selon la revendication 1, où la mise en contact de la couche de surface comprenant du polycarbonate avec la préparation de particules de carbone s'effectue par immersion, dépôt, impression, enduction, pulvérisation et/ou arrosage.

9. Procédé selon la revendication 1, où au moins dans l'étape (C) la surface comprenant du polycarbonate est partiellement recouverte par un masque.

10. Objet en polycarbonate comportant une couche de surface (1) comprenant des particules de carbone électro-conductrices, pouvant être obtenue par un procédé selon l'une des revendications 1 à 9, où les particules de carbone sont situées dans le polycarbonate jusqu'à une profondeur de ≤ 150 µm au-dessous de la surface et les particules de carbone se trouvent à l'intérieur du matériau en polycarbonate de la couche de surface (1) qui les comporte dans une proportion de ≥ 0,1 % en poids à ≤ 10 % en poids.

11. Objet en polycarbonate selon la revendication 10, où la couche de surface (1) comprenant les particules de carbone présente une résistance spécifique de ≥ 10⁻³ Ohm.cm à ≤ 10⁸ Ohm.cm.

12. Objet en polycarbonate selon la revendication 10, où les particules de carbone sont des nanotubes de carbone multiparois, fonctionnalisés de manière non covalente, ayant un diamètre de ≥ 3 nm à ≤ 100 nm.

13. Objet en polycarbonate selon la revendication 10 ayant une première (1) et une deuxième (2) couche de surface comprenant des particules de carbone électro-conductrices, tandis que la dite première (1) et la deuxième (2) couches de surface sont disposées en face l'une de l'autre et sont séparées l'une de l'autre par une couche de polycarbonate (3).

14. Utilisation d'un objet en polycarbonate selon la revendication 10 pour des emballages antistatiques, comme support de composants électroniques, comme écran contre les champs électromagnétiques, pour la modification de la surface de composants et/ou comme élément de renforcement mécanique.
